# EUROPEAN PATENT APPLICATION

(11) **EP 2 495 170 A1**
(43) Date of publication of application: **05.09.2012**
(21) Application number: 12157929.6
(22) Date of filing: 02.03.2012
(51) Int. Cl.: B64G 1/10, B64G 3/00

(54) **Apparatus and method for generating flash of light toward earth by means of reflection of sunlight**

(30) Priority: 03.03.2011 JP 2011046467
(71) Applicant: Japan Aerospace Exploration Agency, Tokyo 182-8522 (JP)
(72) Inventor: Kuninaka, Hitoshi, Kanagawa, 2525210 (JP)
(74) Representative: Robson, Aidan John

(57) **Abstract**

[OBJECT]

It is an object to solve a problem that a light-emitting element and a large-capacity battery required for allowing light generated from a satellite to be visually observed from the earth lead to enormously high costs.

[SOLUTION]

The present invention provides a satellite (10) which comprises a reflecting mirror (14) for reflecting sunlight (11) toward the earth, and a transceiver, wherein the transceiver is operable to receive information including at least a position of the sun, a position of the satellite, and an irradiation point on the earth surface to be irradiated with the reflected light, so as to set a direction of a reflecting surface of the reflecting mirror based on the received information, and wherein the satellite is adapted to orient the reflecting surface of the reflecting mirror in the direction set based on the received information.

## Description

### TECHNICAL FIELD

The present invention relates to satellite technologies, and particularly to a technique of generating a flash of light visually observable from the earth by utilizing an Iridium flare phenomenon in satellites.

### BACKGROUND ART

Iridium (registered trademark) is known as a mobile phone communication service using a large number of communication satellites. In the Iridium system, sixty-six satellites are now flying around the earth. It is known that, if sunlight is reflected by an antenna of the Iridium satellite, the phenomenon of Iridium flares will occur in which the reflected light can be visually observed from the earth. Based on information about a position of the satellite and an orientation of the antenna, it is possible to readily predict a location and a clock time at which the Iridium flare phenomenon can be observed.

### LIST OF PRIOR ART DOCUMENTS

### [PATENT DOCUMENTS]

Patent Document 1: JP 2008-176250A

### SUMMARY OF THE INVENTION

### [PROBLEM TO BE SOLVED BY THE INVENTION]

Patent Document 1 discloses a method designed to allow a satellite being flying above the atmosphere to emit light therefrom in a manner visually observable from the earth. However, as a prerequisite to allowing the satellite to emit light therefrom, the satellite has to be equipped with a light-emitting element capable of emitting light with high brightness enough to be observable from the earth, and a battery having a large capacity for achieving the intended brightness of the light-emitting element. Thus, such a satellite requires enormous costs for fabrication and flight thereof. It is an object of the present invention to provide a satellite capable of generating a flash of light visually observable from the earth, at low cost, by positively utilizing the Iridium flare phenomenon.

### [MEANS FOR SOLVING THE PROBLEM]

In order to achieve the object, according to one aspect of the present invention, there is provided a satellite which comprises a reflecting mirror for reflecting sunlight toward the earth, and a transceiver, wherein the transceiver is operable to receive information including at least a position of the sun, a position of the satellite, and an irradiation point on the earth surface to be irradiated with the reflected light, so as to set a direction of a reflecting surface of the reflecting mirror based on the received information, and wherein the satellite is adapted to orient the reflecting surface of the reflecting mirror in the direction set based on the received information.

Preferably, the satellite of the present invention is adapted to change an angle of the reflecting surface along with traveling of the satellite to fix the reflected light onto the irradiation point.

The satellite of the present invention may be designed to fly in a sun-synchronous polar orbit.

In this case, the satellite may be is designed to fly in a dawn-dusk orbit.

Further, the satellite may be designed to fly in an orbit which allows the satellite to constantly pass through a target point at about 19 o'clock or about 5 o'clock in local time.

Preferably, the satellite of the present invention is adapted to set the reflecting mirror to an ON state and an OFF state in an alternate and repeated manner to blink the reflected light.

In this case, the satellite may be adapted to set the reflecting mirror to the ON state and the OFF state in an alternate and repeated manner by changing an angle of the reflecting mirror.

Alternatively, the reflecting mirror may have a liquid crystal on silicon (LCOS) element on the reflecting surface thereof, wherein the satellite is adapted to set the reflecting mirror to the ON state and the OFF state in an alternate and repeated manner, based on the LCOS element.

Preferably, in the satellite of the present invention, the reflecting mirror is adapted to reflect light having a specific wavelength.

Preferably, the satellite of the present invention comprises a drive unit for driving the reflecting mirror to set a direction of the reflecting surface of the reflecting mirror, wherein the drive unit is operable to orient the reflecting surface in the direction set based on the received information.

Alternatively, the satellite of the present invention may be adapted to be rotated to orient the reflecting surface in the direction set based on the received information.

According to another aspect of the present invention, there is provided a satellite arrangement which comprise a plurality of satellites each composed of the above satellite, wherein the plurality of satellites are designed to fly in formation.

In the satellite arrangement of the present invention, the plurality of satellites may be designed to fly in a single line formation.

Alternatively, the plurality of satellites are designed to fly in a two-dimensional array formation.

In this case, one or more of the plurality of satellites may be adapted to reflect sunlight toward the irradiation point, and each of the remaining satellites may be adapted to avoid reflecting sunlight toward the irradiation point.

According to yet another aspect of the present invention, there is provided a satellite arrangement which comprises a plurality of satellites each composed of the above satellite, wherein a first group consisting of one or more of the plurality of satellites, and a second group consisting of one or more of the plurality of satellites, are designed to fly in respective opposite directions.

According to still another aspect of the present invention, there is provided a method for reflecting sunlight toward the earth using a satellite having a reflecting mirror and a transceiver. The method comprises the steps of: receiving, by the transceiver, information including at least a position of the sun, a position of the satellite, and an irradiation point on the earth surface to be irradiated with the reflected light, so as to set a direction of a reflecting surface of the reflecting mirror based on the received information; and orienting, by the satellite, the reflecting surface of the reflecting mirror in the direction set according to the received information.

Preferably, in the method of the present invention, the step of orienting, by the satellite, the reflecting surface of the reflecting mirror in the direction set according to the received information, includes changing an angle of the reflecting surface along with traveling of the satellite to fix the reflected light onto the irradiation point.

In the method of the present invention, the satellite may be designed to fly in a sun-synchronous polar orbit.

In this case, the satellite may be designed to fly in a dawn-dusk orbit.

Further, the satellite may be designed to fly in an orbit which allows the satellite to constantly pass through a target point at about 19 o'clock or about 5 o'clock in local time.

### [EFFECT OF THE INVENTION]

The present invention makes it possible to positively create the Iridium flare phenomenon to allow a flash of light to be observed from a designated position on the earth.

### BRIEF DESCRIPTION OF THE DRAWINGS

FIG. 1 is a schematic diagram illustrating a satellite according to one embodiment of the present invention.
FIG. 2 is a schematic diagram illustrating a satellite according to another embodiment of the present invention.
FIG. 3 is schematic diagram illustrating a relationship between respective ones of sunlight, a flare spot, and a reflecting surface.
FIG. 4 is a schematic diagram illustrating a relationship between a satellite according to one embodiment of the present invention, and the earth surface (in cases where the satellite is designed to constantly pass through a target point at about 5 o'clock in local time).
FIG. 5 is a schematic diagram illustrating an orbit of a satellite according to one embodiment of the present invention (in cases where the satellite is designed to constantly pass through a target point at about 19 o'clock in local time)
FIG. 6 is a schematic diagram illustrating a flare spot which is generated by a satellite according to one embodiment of the present invention.
FIG. 7 is a schematic diagram illustrating a satellite arrangement according to one embodiment of the present invention, wherein the satellite arrangement comprises a plurality of satellites arranged in a two-dimensional array.

### DESCRIPTION OF EMBODIMENTS

With reference to the drawings, a satellite according to one embodiment of the present invention will now be described.

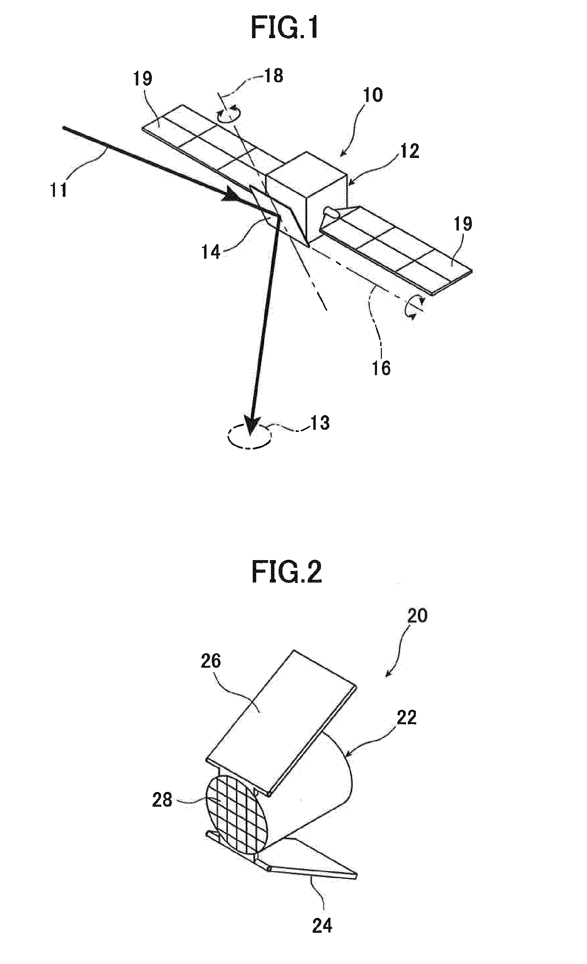

FIG. 1 is a schematic diagram illustrating a satellite according to one embodiment of the present invention. The satellite 10 comprises a satellite body 12, a reflecting mirror 14 for reflecting sunlight toward the earth, and a transceiver (not illustrated) such as an antenna for performing communications with a base station on the earth, etc. The satellite body 12 and the reflecting mirror 14 are connected together, for example, through a drive unit, so that the reflecting mirror 14 can be moved about an axis 16 and an axis 18 each serving as a rotational axis so as to change an angle of a reflecting surface of the reflecting mirror 14. Sunlight 11 can be reflected toward a desired position (irradiation point 13) on the earth by changing the angle of the reflecting mirror 14. In the embodiment illustrated in FIG. 1, the supply of electric power is performed by a photovoltaic array 19. Alternatively, a battery may be used, or a combination of a photovoltaic array and a battery may be used. Further, in the embodiment illustrated in FIG. 1, the angle of the reflecting mirror 14 is changed while fixing an orientation of the satellite body 12. Alternatively, as illustrated in FIG. 2, a spinning satellite 20 may be employed. In this case, respective angles of two reflecting mirrors 24, 26 can be changed by rotating the entire satellite.

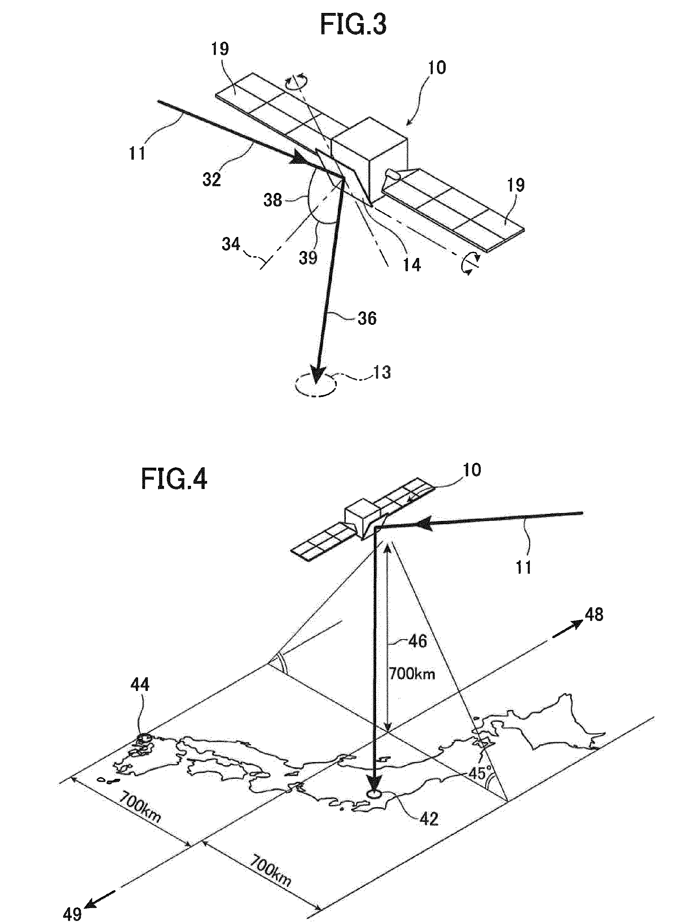

The angle of the reflecting surface of the reflecting mirror (14, 24, 26) is set based on a position of the satellite, an orientation of sunlight illuminating the satellite, and a position of the irradiation point, and according to the reflection law. In an example illustrated in FIG. 3, the angle of the reflecting surface is adjusted to a value which allows an angle between a direction 32 of the sunlight and a normal line 34 with respect to the reflecting surface (i.e., an incident angle 38), and an angle between the normal line 34 with respect to the reflecting surface and a direction 36 connecting the reflecting surface and the irradiation point (i.e., an output angle 40) to become equal to each other. In other words, the orientation of the reflecting surface of the reflecting mirror 14 is adjusted such that the direction 34 is located on a bisector of an angle defined between the direction 32 and the direction 36. The satellite 10 may be adapted to acquire information about a position of the irradiation point, a position of the sun and a position of the satellite 10 by performing communication with a base station on the earth via the transceiver. However, as for the information about the position of the sun and the position of the satellite 10, the satellite 10 may be adapted to acquire it by performing communication with an optical sensor or another satellite. Alternatively, the information about the angle of the reflecting mirror 14 may be acquired directly from the base station.

FIG. 4 illustrates a relationship between the satellite 10 and the earth surface. For example, the satellite 10 may be designed to fly at an altitude of 700 km which is the same as that of the Iridium satellite. In this case, a flare spot can be created throughout Japan by changing the angle of the reflecting mirror 14 from + 45 degrees to - 45 degrees.

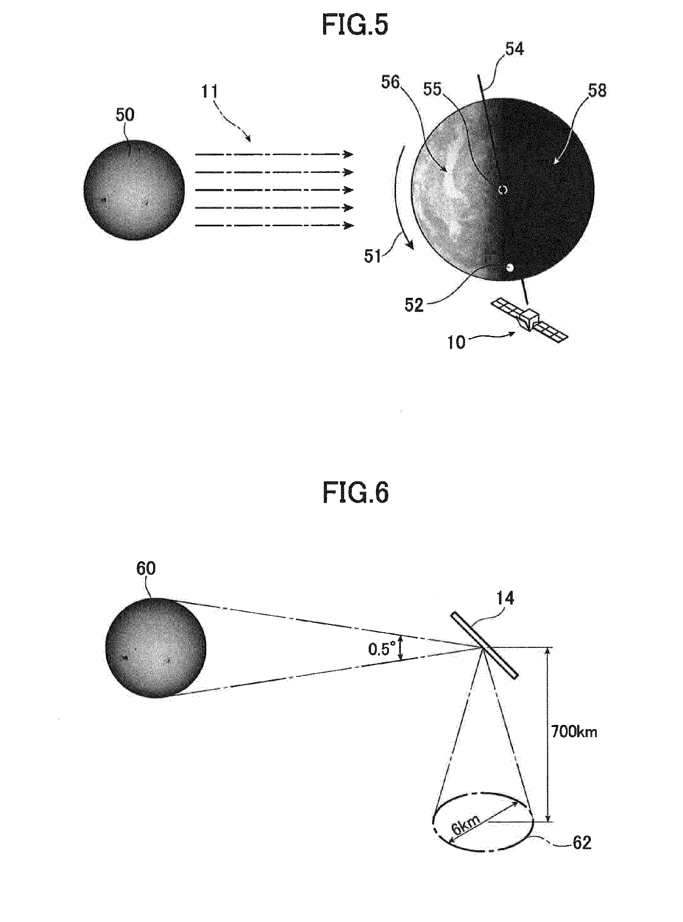

FIG. 5 illustrates one example of an orbit of the satellite 10. In this example, the satellite 10 is designed to fly in a sun-synchronous polar orbit. The term "sun-synchronous polar orbit" means one of a plurality of satellite polar orbits passing through the North and South Poles, in which an angle defined between sunlight and a satellite orbital plane is maintained constant. When the satellite 10 flies in a dawn-dusk orbit, the satellite 10 can continually receive sunlight to receive the supply of electric power from a solar battery, so that it becomes possible to reduce a capacity of a secondary battery to be mounted on the satellite 10. On the other hand, it becomes possible to observe a flash of light from the earth in the dark, e.g., before sunrise or after sunset. The dawn-dusk orbit includes, for example, an orbit which allows the satellite 10 to constantly pass through a target point at about 7 o'clock or about 19 o'clock (or, 5 o'clock or about 17 o'clock) in local time. As used here, the term "about" means that a specific time has a time width of one hour therebefore and thereafter.

FIG. 6 is a schematic diagram illustrating a size of a flare spot 62. For example, on an assumption that a distance between the satellite 10 and the irradiation point is 700 km, a diameter of the flare spot 62 is about 6 km. The diameter of the flare spot 62 becomes larger along with an increase in distance between the satellite 10 and the earth surface. Therefore, the size of the flare spot 62 can be adjusted by changing the distance between the satellite 10 and the earth surface.

Generally, the satellite 10 is traveling with respect to the earth surface and the sun. Thus, if the angle of the reflecting mirror is fixed, a position of the flare spot will be displaced. For this reason, the satellite 10 is adapted to change the angle of the reflecting surface of the reflecting mirror 14 along with traveling of the satellite 10, so as to prevent the position of the flare spot from being displaced from the irradiation point. In other words, the angle of reflecting surface is changed to allow the flare spot to be fixed onto the irradiation point, so that it becomes possible to prolong a visually observable time of a flash of light. For example, in cases where the distance between the satellite 10 and the earth surface is 700 km, and a traveling speed of the satellite is 8 km/sec, a tracking speed of angular correction is 0.7 degree/sec.

The flare spot can be blinked by changing the angle of the reflecting mirror 14, as in DLP (Digital Light Processing). Specifically, the reflecting surface of the reflecting mirror 14 can be set to a first angle for allowing the flare spot to be placed on the irradiation point (for allowing the reflecting mirror 14 to be set to an ON state), and a second angle for allowing the flare spot to be not placed on the irradiation point (for allowing the reflecting mirror 14 to be set to an OFF state) in an alternate and repeated manner, to blink the reflected light, i.e., the flash of light, when observed from the irradiation point. Further, the reflecting surface may be quickly switched between the ON state and the OFF state, to adjust brightness of the reflected light depending on a ratio between the ON and OFF states.

Further, the reflected light may be blinked by a liquid crystal on silicon (LCOS) element provided on the reflecting surface of the reflecting mirror 14. In this case, the brightness of the reflected light may also be adjusted using the LCOS.

The reflecting mirror 14 may be adapted to reflect only sunlight having a specific wavelength. For example, a color film or a color foil may be attached onto the reflecting mirror 14 to reflect only a part of a wavelength range of sunlight, such as blue light or red light. Alternatively, the reflecting mirror 14 may be composed of a plurality of reflecting sub-mirrors each adapted to reflect only light having a different wavelength.

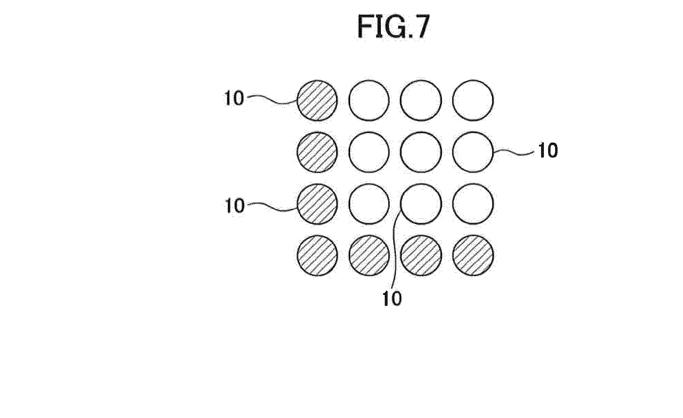

In another embodiment of the present invention, a plurality of the satellites 10 may be used. Specifically, the plurality of satellites 10 may be designed to fly in formation. For example, the plurality of satellites 10 may be designed to fly in a single line formation, e.g., at intervals of about 10 km in the same orbit. In this case, a color of reflected light may vary in each of the satellites to provide enhanced aesthetic effect. Alternatively, as illustrated in FIG. 7, the plurality of satellites 10 may be designed to fly in a two-dimensional array formation. In this case, a character or a figure may be formed by setting the reflecting mirrors of a part of the satellites to the ON state and setting the reflecting mirrors of the remaining satellites to the OFF state. In the example illustrated in FIG. 7, the alphabetic character L is indicated.

With a view to adjusting an interval between respective ones of the plurality of satellites 10, it is preferable that each of the satellites is propelled by electric power so as to accurately control a position of the satellite. In addition, for example, two satellites or two groups of satellites may be used in such a manner that one of the satellites or one of the groups flies from the north to the south, and the other satellite or the other group flies from the south to the north. Specifically, one of the satellites or one of the groups may be designed to fly in an orbit which allows the satellite or the group to constantly pass through a target point at about 7 o'clock in local time, and the other satellite or the other group may be designed to fly in an orbit which allows the other satellite or the other group to constantly pass through the target point at about 19 o'clock in local time.

### INDUSTRIAL APPLICABILITY

A flash of light observable from the earth based on the satellite of the present invention is usable in entertainment-related fields. Specifically, the present invention can be used, for example, in wedding ceremonies, outdoor events and theme parks.

### EXPLANATION OF CODES

- 10:: satellite
- 11:: sunlight
- 12:: satellite body
- 13:: irradiation point
- 14:: reflecting mirror
- 16:: rotational axis
- 18:: rotational axis
- 19:: photovoltaic array
- 20:: spinning satellite
- 22:: satellite body
- 24:: reflecting mirror
- 26:: reflecting mirror
- 28:: photovoltaic array
- 32:: direction of sunlight
- 34:: normal line with respect to reflecting surface
- 36:: direction connecting reflecting surface and irradiation point
- 38:: angle between direction 32 and normal line 34 (incident angle)
- 39:: angle between normal line 34 and direction 36 (output angle)
- 42:: flare spot
- 44:: flare spot
- 46:: altitude
- 48:: north
- 49:: south
- 50:: sun
- 51:: earth rotation
- 52:: flare spot
- 54:: sun- synchronous polar orbit
- 55:: north pole
- 56:: daytime side
- 58:: nighttime side
- 60:: sun
- 62:: flare spot

## Claims

1. A satellite comprising a reflecting mirror for reflecting sunlight toward the earth, and a transceiver, wherein the transceiver receives information on setting a direction of a reflecting surface of the reflecting mirror based on a position of the sun, a position of the satellite, and an irradiation point on the earth surface to be irradiated with the reflected light and wherein the satellite orients the reflecting surface of the reflecting mirror in the direction set based on the information.

2. The satellite as defined in claim 1, which is adapted to change an angle of the reflecting surface in response to traveling of the satellite to fix the reflected light onto the irradiation point.

3. The satellite as defined in claim 1 or 2, which flies in a sun- synchronous polar orbit.

4. The satellite as defined in claim 3, which flies in a dawn-dusk orbit.

5. The satellite as defined in claim 3, which flies in an orbit which allows the satellite to constantly pass through a target point at about 19 o'clock or about 5 o'clock in local time.

6. The satellite as defined in any one of claims 1 to 5, wherein the reflecting mirror is set to an ON state and an OFF state in an alternate and repeated manner to blink the reflected light.

7. The satellite as defined in claim 6, wherein the reflecting mirror is set to the ON state and the OFF state in an alternate and repeated manner by changing an angle of the reflecting mirror.

8. The satellite as defined in claim 6, wherein the reflecting mirror has a liquid crystal on silicon (LCOS) element on the reflecting surface thereof, and wherein the reflecting mirror is set to the ON state and the OFF state in an alternate and repeated manner by using the LCOS element.

9. The satellite as defined in any one of claims 1 to 8, wherein the reflecting mirror reflects light having a specific wavelength.

10. The satellite as defined in any one of claims 1 to 9, which comprises a drive unit for driving the reflecting mirror to set a direction of the reflecting surface of the reflecting mirror, the drive unit orienting the reflecting surface in the direction set based on the information.

11. The satellite as defined in any one of claims 1 to 9, wherein the reflecting surface is oriented in the direction set based on the information by rotating the satellite.

12. A plurality of satellites wherein each of the plurality of satellites is the satellite as defined in any one of claims 1 to 11, the plurality of satellites flying in formation.

13. The plurality of satellites as defined in claim 12, wherein one or more of the plurality of satellites reflect sunlight toward the irradiation point, and each of the remaining satellites avoids reflecting sunlight toward the irradiation point.

14. A plurality of satellites wherein each of the plurality of satellites is the satellite as defined in any one of claims 1 to 11 and wherein a first group consisting of one or more of the plurality of satellites and a second group consisting of one or more of the plurality of satellites fly in respective opposite directions.

15. A method for reflecting sunlight toward the earth using a satellite having a reflecting mirror and a transceiver, comprising the steps of:
receiving, by the transceiver, information on setting a direction of a reflecting surface of the reflecting mirror based on a position of the sun, a position of the satellite, and an irradiation point on the earth surface to be irradiate with the reflected light; and
orienting, by the satellite, the reflecting surface of the reflecting mirror the direction set based on the information.
